# EUROPÄISCHE PATENTSCHRIFT

(11) **EP 3 376 141 B1**
(45) Veröffentlichungstag und Bekanntmachung des Hinweises auf die Patenterteilung: **26.02.2020**
(21) Anmeldenummer: 17161101.5
(22) Anmeldetag: 15.03.2017
(51) Int. Cl.: F25D 13/06, A22C 25/08, A23B 4/06, A22B 5/00

(54) **ANORDNUNG UND VERFAHREN ZUR VERARBEITUNG VON FISCHEN**
ASSEMBLY AND METHOD FOR PROCESSING FISH
AGENCEMENT ET PROCÉDÉ DESTINÉS À LA PRÉPARATION DE POISSONS

(43) Veröffentlichungstag der Anmeldung: 19.09.2018
(73) Patentinhaber: Nordischer Maschinenbau Rud. Baader GmbH + Co. KG, 23560 Lübeck (DE)
(72) Erfinder: Jacobsen, Ulf, 23611 Bad Schwartau (DE)
(74) Vertreter: Stork Bamberger Patentanwälte PartmbB

(56) Entgegenhaltungen:
- EP-A1- 2 245 941
- WO-A1-2016/170550
- WO-A1-2017/027511

## Beschreibung

Die vorliegende Erfindung betrifft eine Anordnung sowie ein Verfahren zur Verarbeitung von Fischen.

Derartige Anordnungen und Verfahren kommen bei der Verarbeitung von Seefisch, insbesondere von Lachsen, zum Einsatz. Eine solche Anordnung sowie ein solches Verfahren sind beispielsweise aus der Druckschrift WO 2016/170550 A1 bekannt. Die Fische werden nach dem Schlachten in eine Spiraltankeinrichtung gegeben, die mit gekühltem Seewasser gefüllt ist. Mittels der Spiraltankeinrichtung werden die Fische auf eine vorgegebene Soll-Temperatur heruntergekühlt, um den Eintritt der Totenstarre hinauszuzögern. Zugleich unterstützt das Spülen der Fische in der Spiraltankeinrichtung mit Seewasser den Ausblutevorgang. Als Fischschlachteinrichtungen kommen eine oder mehrere Maschinen zum Einsatz, mittels derer die Fische zunächst betäubt werden und anschließend das Ausbluten der Fische eingeleitet wird. Derartige Fischschlachteinrichtungen umfassen hierzu entsprechende Fisch-Schlachtwerkzeuge, die als Betäubungsmittel sowie als Ausblutungswerkzeug eingerichtet sind.

In derartigen Spiraltankeinrichtungen werden die Fische nach dem FIFO-Prinzip temporär zwischengespeichert. So werden diejenigen Fische, die zuerst in die Spiraltankeinrichtung übergeben worden sind ("first-in") nach dem Durchlaufen der Spiraltankeinrichtung diese auch als erste wieder verlassen ("first-out"). Nach dem Durchlaufen der Spiraltankeinrichtung werden die Fische an einen oder mehrere nachgeordnete Fisch-Verarbeitungsmaschinen übergeben, um dort weiterverarbeitet zu werden. Bei den Fisch-Verarbeitungsmaschinen handelt es sich beispielsweise um Schlachtmaschinen zum Entweiden der Fische sowie zur anschließenden Weiterverarbeitung.

Nachteilig ist, dass die Größe und das Gewicht der Fische, die von der Spiraltankeinrichtung an die Fisch-Verarbeitungsmaschine überführt werden, zufallsbedingt Schwankungen unterworfen ist. Dies führt dazu, dass die Fischverarbeitungsmaschinen mit einer großen Brandbreite verschiedener Fischgrößen bzw. Fischgewichte konfrontiert werden. Daraus ergeben sich gleich mehrere Nachteile. So ist es entweder erforderlich, die Fische vor der Weiterverarbeitung in den Fischbearbeitungsmaschinen je nach Größe und/oder Gewicht auf verschiedene Bearbeitungslinien aufzuteilen oder die Fischbearbeitungsmaschinen auf eine bestimmte Fischgröße fest voreinzustellen. Eine optimale Verarbeitung der Fische mittels der Fisch-Verarbeitungsmaschinen ist folglich aufgrund der schwankenden Fischgrößen- und Fischgewichtsverteilung nur für diejenigen Fische möglich, deren Größe und/oder Gewicht sich in einem Bereich befindet, für den die Fisch-Verarbeitungsmaschine optimal eingestellt ist.

Es ist daher Aufgabe der vorliegenden Erfindung, eine Anordnung vorzuschlagen, die eine optimale Fischverarbeitung gewährleistet. Weiter ist es Aufgabe, den Beladezustand der Spiraltankeinrichtung mit Fisch hinsichtlich relevanter Fischparameter bereitzustellen.

Die Aufgabe wird durch die eingangs genannte Anordnung dadurch gelöst, dass eine zum Betäuben und Einleiten des Ausblutens der Fische eingerichtete Fisch-Schlachteinrichtung, die eine zum Erfassen der Fischanzahl eingerichtete Fisch-Zähleinrichtung aufweist, eine zum Überführen der betäubten Fische an eine Spiraltankeinrichtung eingerichtete erste Fördereinrichtung, wobei die Fördereinrichtung wenigstens eine zur Erfassung eines ersten Massendurchsatzes der betäubten Fische erste Messeinrichtung aufweist und die Spiraltankeinrichtung einen zur Aufnahme einer Flüssigkeit eingerichteten Aufnahmebehälter umfasst, in dem eine sich von einem ersten Ende zu einem zweiten Ende erstreckende Spiralförderschnecke drehbar gelagert angeordnet ist, wobei die Spiralförderschnecke mit der Innenwandung des Aufnahmebehälters eine Vielzahl von Fisch-Aufnahmekammern bildet, die Spiralförderschnecke mittels einer ersten Antriebseinheit rotierend antreibbar eingerichtet ist, um in den Fisch-Aufnahmekammern vorhandene Fische in Richtung des zweiten Endes des Aufnahmebehälters mittels der Spiralförderschnecke durch die Flüssigkeit zu fördern, eine an dem zweiten Ende des Aufnahmebehälters angeordnete zweite Fördereinrichtung, die eingerichtet ist, die Fische an eine der Spiraltankeinrichtung nachgeordnete mindestens eine Fisch-Verarbeitungsmaschine zu überführen und eine Steuereinrichtung, an die zumindest die Fisch-Zähleinrichtung, die erste Messeinrichtung sowie die erste Antriebseinheit angeschlossen sind, wobei die Steuereinrichtung eine Auswerteinheit umfasst, die eingerichtet ist, auf Basis der erfassten Fischanzahl und des erfassten ersten Massendurchsatzes für mindestens eine der Fisch-Aufnahmekammern jeweils eine fischmengenbezogene Prädiktionsgröße zu ermitteln, umfasst.

Anhand der mittels der Steuereinrichtung und der Auswerteeinheit ermittelten fischmengenbezogenen Prädiktionsgrößen ist es erstmals auf überraschend einfache Weise möglich, ein Schätzgröße bereitzustellen, die Rückschluss auf den jeweiligen Inhalt der Fisch-Aufnahmekammern zulässt. So kann die sich in den Fisch-Aufnahmekammern befindende Fischmenge abgeschätzt werden, ohne jeden einzelnen der Fisch aufwändig vermessen zu müssen. Mit anderen Worten ist die Auswerteeinheit ausgebildet und eingerichtet, den Beladezustand der Spiraltankeinrichtung zu erfassen.

Eine zweckmäßige Weiterbildung der Erfindung ist dadurch gekennzeichnet, dass die Steuereinrichtung ausgebildet ist, die jeweilige Prädiktionsgröße als Fisch-Durchschnittsgewicht für die jeweilige Fisch-Aufnahmekammer basierend auf dem erfassten ersten Massendurchsatz sowie der erfassten Fischanzahl zu ermitteln. Mit anderen Worten wird jeweils eine Prädiktionsgröße jeweils einer der Fischaufnahmekammern in Form des Fisch-Durchschnittsgewichts zugeordnet. Dies bietet den Vorteil, dass das Durchschnittsgewicht der Fische in jeder der Fisch-Aufnahmekammern als Schätzwert ermittelt wird. Vorteilhafterweise wird so das Einzelgewicht der Fische auf effektive Weise bestimmt, ohne dass es dazu aufwendiger messtechnischer Einrichtungen bedarf, die etwa das tatsächliche Einzelgewicht jedes einzelnen Fisches erfassen würden. Vorzugsweise wird das jeweilige der Fisch-Durchschnittsgewichte durch Quotientenbildung aus dem erfassten ersten Massendurchsatz und der erfassten Fischanzahl bestimmt.

Gemäß einer zweckmäßigen Ausgestaltung der Erfindung umfasst die Steuereinrichtung eine Prädiktionseinheit, die eingerichtet ist, basierend auf den ermittelten Fisch-Durchschnittsgewichten anhand mindestens eines vorgegebenen Fischgrößenverteilungsdatensatzes für jede der Fisch-Aufnahmekammern als weitere Prädiktionsgrößen jeweils Fischgrößenverteilungsprädiktionswerte zu ermitteln, die Rückschluss auf das jeweilige Einzelgewicht der jeweils in den Fischen-Aufnahmekammern vorhandenen Fische geben. Mittels der Prädiktionseinheit ist es so möglich, die jeweiligen Einzelgewichte der in den Fisch-Aufnahmekammern vorhandenen Fische zu schätzen.

Die Prädiktionseinheit ist eingerichtet, anhand des ermittelten Fisch-Durchschnittsgewichts die jeweiligen Einzelgewichte der Fische auf Basis des Fischgrößenverteilungsdatensatzes zu bestimmen. Der Fischgrößenverteilungsdatensatz umfasst beispielsweise Informationen über die Gewichtsverteilung der Fische einer bestimmten Fischart. Weiter bevorzugt ist die Prädiktionseinheit eingerichtet, auf mehrere vorgegebene Fischgrößenverteilungsdatensätze zuzugreifen, in denen jeweils Gewichtsverteilungen von Fischen unterschiedlichen Fisch-Durchschnittsgewichten hinterlegt sind. Die Fischgrößenverteilungsdatensätze stellen folglich einen Zusammenhang zwischen den jeweiligen Einzelgewichten der Fische und der Häufigkeit ihres Vorhandenseins her. Alternativ ist die Prädiktionseinheit eingerichtet, die Fischgrößenverteilungsdatensätze algorithmisch zu ermitteln, beispielsweise durch Berechnung entsprechender Wahrscheinlichkeitsverteilung.

Gemäß einer weiteren bevorzugten Ausbildung der Erfindung ist die Prädiktionseinheit weiter eingerichtet, für jede der Fisch-Aufnahmekammern jeweils einen Gesamtgewichtsschätzwert, der das Summengewicht sämtlicher in jeweils einer der Fisch-Aufnahmekammern vorhandenen Fische repräsentiert, zu ermitteln. Dies bietet den Vorteil, dass die sich jeweils in einer der Fisch-Aufnahmekammern befinde Fisch-Gesamtmasse vorhergesagt wird.

Eine zweckmäßige Weiterbildung der Erfindung sieht vor, dass die Steuereinrichtung eine Volumenprädiktionseinheit umfasst, die ausgebildet und eingerichtet ist, auf Basis der Fischanzahl und des ersten Massendurchsatzes eine Volumenprädiktionsgröße zu ermitteln, die das pro Zeiteinheit an die Spiraltankeinrichtung überführte Fischvolumen repräsentiert. Vorteilhafterweise wird so das an die Spiraltankeinrichtung überführte Fischvolumen mittels der Volumenprädiktionseinheit bestimmt. Die Volumenprädiktionseinheit greift hierzu beispielsweise auf mindestens einen vorgegebenen Fischvolumenverteilungsdatensatz zu, anhand dessen das Fischvolumen durch Schätzung ermittelt wird.

Gemäß einer vorteilhaften Weiterbildung der Erfindung umfasst die Steuereinrichtung eine erste Reglungseinheit, die durch Vergleich eines vorgegebenen Aufnahmekammerfüllvolumens und der Volumenprädiktionsgröße eingerichtet ist, die Fördergeschwindigkeit, mit der die in den Fisch-Aufnahmekammern vorhandenen Fische mittels der Spiralförderschnecke gefördert werden, mittels der Antriebseinheit derart zu steuern, dass das in den jeweiligen Fisch-Aufnahmekammern vorhandene Fischvolumen höchstens den vorgegebenen Aufnahmekammerfüllvolumen entspricht. Dies bietet den Vorteil, dass das jeweils in einer der Aufnahmekammern zur Verfügung stehende Volumen beim Befüllen mit Fischen optimal ausgenutzt wird, sodass eine optimale Umströmung der Fische mit dem Fluid zur Kühlungszwecken erfolgt. Vorzugsweise entspricht die in der jeweiligen Fisch-Aufnahmekammer vorhandene Fischmenge mindestens 50% bis höchstens 60% des zur Verfügung stehenden Aufnahmekammerfüllvolumens. Die Einhaltung dieses Mischungsverhältnisses von Fluid und Fisch garantiert eine optimale Führung des Fluids um die Fische herum, um eine gleichmäßige Kühlung der Fische zu gewährleisten. Ein andernfalls mögliches Über- bzw. Vorbeiströmen ohne innigen Kontakt des Fluids mit allen Fischkörpern wird so zuverlässig vermieden.

Mit anderen Worten ist die Regelungseinheit bevorzugt weiter eingerichtet, die Fördergeschwindigkeit, mit der die Fische mittels der Spiralförderschnecke gefördert werden, mittels der Antriebseinheit derart zu steuern, dass das in den jeweiligen Fisch-Aufnahmekammern vorhandene Fischvolumen mindestens einem vorgegebenen Mindestvolumen entspricht.

Eine weitere zweckmäßige Ausgestaltung der Erfindung zeichnet sich dadurch aus, dass die erfindungsgemäße Anordnung eine Parametriereinrichtung umfasst, die ausgebildet und eingerichtet ist, die mindestens eine Fisch-Bearbeitungsmaschine gemäß vorbestimmter Parametrierdaten auf Basis der für jeden der Fisch-Aufnahmekammern ermittelten Prädiktionsgröße voreinzustellen. So wird erreicht, dass die Fisch-Verarbeitungsmaschine optimal auf die zu verarbeitenden Fische eingestellt bzw. parametriert wird.

Mit der vorliegenden Erfindung ist es erstmal möglich, die Fisch-Verarbeitungsmaschinen mit entsprechendem Vorlauf vorzuparametrieren. Die Verweildauer der Fische in der Spiraltankeinrichtung kann so genutzt werden, um die erforderlichen Einstellungen anhand der vorbestimmten Parametrierdaten vorzunehmen. Da für jede der Fischaufnahmekammern eine entsprechende Prädiktionsgröße ermittelt wird, ist die Parametriereinrichtung eingerichtet, die Fisch-Verarbeitungsmaschine jeweils auf verschiedene sich in den jeweiligen Fisch-Aufnahmekammern befindenden Fischchargen vorzuparametrieren. Die Parametrierdaten umfassen entsprechende Maschineneinstellanweisungen, die seitens der Parametriereinrichtung in Abhängigkeit der jeweils ermittelten Art der Prädiktionsgröße, also beispielsweise den jeweiligen Einzelgewichten der Fische, den Einzelvolumina der Fische, dem jeweiligen Fisch-Durchschnittsgewicht, den Fischgrößenverteilungsprädiktionswerten, dem Gesamtgewichtsschätzwert und/oder der jeweiligen Volumenprädiktionsgröße zur Parametrierung der Fisch-Verarbeitungsmaschine(n) herangezogen werden.

Ein weiterer Vorteil besteht darin, dass anhand der ermittelten Prädiktionsgröße Produktionsvorhersagen getroffen werden können und so der gesamte Produktionsprozess optimiert wird. Beispielsweise ist es möglich, auf Basis der Prädiktionsgröße eine Produktionssimulation durchzuführen und die zu erwartenden Produktionsergebnisse durch Simulation vorab zu ermitteln. Ergibt diese Produktionssimulation beispielsweise, dass noch Rohmaterial erforderlich sein wird, um die avisierte Produktion vollständig ausführen zu können, kann dies bereits frühzeitig ermittelt und ggf. schon vor Beginn des eigentlichen Produktionsprozesses nachgeordert werden.

Gemäß einer vorteilhaften Weiterbildung der Erfindung umfasst die zweite Fördereinrichtung eine zur Erfassung eines zweiten Massendurchsatzes der von der Spiraltankeinrichtung an die nachgeordnete mindestens eine Fisch-Verarbeitungsmaschine überführten Fische eingerichtete zweite Messeinrichtung. Die zweite Messeinrichtung ist vorzugsweise als Band- oder Flusswaage ausgebildet. Auf diese Weise wird der Massendurchsatz der die Spiraltankeinrichtung verlassenden Fische erfasst. Die zweite Messrichtung steht ebenfalls mit der Steuereinrichtung bzw. der Auswerteeinheit zur Weiterleitung des erfassten Massendurchsatzes in Verbindung. Die Verbindung erfolgt beispielsweise über ein entsprechendes elektrisches oder opto-elektronisches DatenBussystem.

Eine bevorzugte Ausführungsform der Erfindung zeichnet sich dadurch aus, dass die Steuereinrichtung eine zweite Regelungseinheit umfasst, die ausgebildet ist, durch Vergleich des erfassten zweiten Massendurchsatzes mit einer vorgegebenen Durchsatzleistung der mindestens einen Fisch-Verarbeitungsmaschine, die Fördergeschwindigkeit der zweiten Fördereinrichtung derart zu steuern, dass der zweite Massendurchsatz zumindest im Wesentlichen der Durchsatzleistung der mindestens einen Fisch-Verarbeitungsmaschine entspricht.

Dies bietet den Vorteil, dass der Fisch-Verarbeitungsmaschine ein im Wesentlichen konstanter Massenstrom an Fischen zugeführt wird. Anders ausgedrückt werden die Fische, die die Spiraltankeinrichtung verlassen, mittels der zweiten Fördereinrichtung derart der Fisch-Verarbeitungsmaschine zugeführt, dass die zugeführte Fischmenge von dieser entsprechend ihrer aktuellen Durchsatzleistung verarbeitbar ist.

Weiter bevorzugt ist die Steuereinrichtung eingerichtet, sofern der erfasst zweite Massendurchsatz geringer als die von der Spiraltankeinrichtung ausgegebene Fischmenge ist, mittels der ersten Antriebseinheit die Fördergeschwindigkeit, mit der die in den Fisch-Aufnahmekammern vorhandenen Fische mittels der Spiralförderschnecke gefördert werden, zu reduzieren. Gemäß einer weiteren vorteilhaften Ausführungsform umfasst die erfindungsgemäße Anordnung weiter eine zum Beschicken der Fisch-Aufnahmekammern mit Fisch ausgebildete Verteileinrichtung, wobei die Verteileinrichtung eine Verteilfördereinrichtung zur Übernahme der Fische von der ersten Fördereinrichtung und ein zwischen dem ersten Ende und dem zweiten Ende entlang der Spiralförderschnecke verfahrbar eingerichtetes Abweiserelement zum Überführen der Fische in eine der Fischaufnahmekammern aufweist.

Die Verteileinrichtung bietet den Vorteil, dass - insbesondere in der Anfahrphase der Spiraltankeinrichtung - die einzelnen der Fisch-Aufnahmekammern steuerbar mit Fischen beschickbar eingerichtet sind. So ist es möglich, beispielsweise beim Beschicken einer noch nicht mit Fischen gefüllten Spiraltankeinrichtung zunächst die dem zweiten Ende nächstliegende der Fisch-Aufnahmekammern mit Fischen zu beschicken. Hierzu wird das Abweiserelement schrittweise ausgehend von dem zweiten Ende in Richtung des ersten Endes des Aufnahmebehälters mittels der Steuereinrichtung verfahren, so dass die Aufnahme-Kammern schrittweise nacheinander gefüllt werden. Auf diese Weise können die Fischaufnahmekammern initial in möglichst kurzer Zeit mit Fisch beschickt werden. Ein weiterer Vorteil besteht darin, dass die Verteilfördereinrichtung eingerichtet ist, im dynamischen Betrieb die einzelnen der Fisch-Aufnahmekammern gleichmäßig mit Fischen zu beschicken.

Des Weiteren wird die Aufgabe durch ein entsprechendes Verfahren mit den eingangs genannten Merkmale gelöst, wobei das erfindungsgemäße Verfahren die folgenden Schritte umfasst: Betäuben und Einleiten des Ausblutens der Fische mittels einer Fisch-Schlachteinrichtung, Erfassen der Fischanzahl mittels einer Zähleinrichtung, Überführen der betäubten Fische an eine Spiraltankeinrichtung mittels einer ersten Fördereinrichtung, Erfassen eines ersten Massendurchsatzes der betäubten Fische mittels einer ersten Messeinrichtung während des Überführens, wobei die Spiraltankeinrichtung einen zur Aufnahme einer Flüssigkeit eingerichteten Aufnahmebehälter umfasst, in dem eine sich von einem ersten Ende zu einem zweiten Ende erstreckende Spiralförderschnecke drehbar gelagert angeordnet ist, wobei die Spiralförderschnecke mit der Innenwandung des Aufnahmebehälters eine Vielzahl von Fisch-Aufnahmekammern bildet und die Spiralförderschnecke mittels einer ersten Antriebseinheit rotierend angetrieben wird, um in den Fisch-Aufnahmekammern vorhandene Fische in Richtung des zweiten Endes des Aufnahmebehälters mittels der Spiralförderschnecke durch die Flüssigkeit zu fördern, Überführen der Fische an eine der Spiralfördereinrichtung nachgeordnete mindestens eine Fisch-Verarbeitungsmaschine mittels einer an dem zweiten Ende des Aufnahmebehälters angeordneten zweiten Fördereinrichtung, und Ermitteln einer fischmengenbezogenen Prädiktionsgröße auf Basis der erfassten Fischanzahl und des erfassten ersten Massendurchsatzes für mindestens eine der Fisch-Aufnahmekammern mittels einer Auswerteeinheit einer Steuereinrichtung, an die zumindest die Fischzähleinrichtung, die erste Messeinrichtung sowie die erste Antriebeinheit angeschlossen sind, wobei die Steuereinrichtung die Auswerteeinheit umfasst.

Gemäß einer vorteilhaften Weiterbildung des erfindungsgemäßen Verfahrens ist vorgesehen, dass die jeweilige Prädiktionsgröße als Fischdurchschnittsgewicht für die jeweilige Fisch-Aufnahmekammer basierend auf dem erfassten ersten Massendurchsatz sowie der erfassten Fischanzahl ermittelt wird.

Gemäß einer bevorzugten Ausführungsform werden als weitere Prädiktionsgrößen mittels einer Prädiktionseinheit basierend auf den ermittelten Fisch-Durchschnittsgewichten anhand mindestens eines vorgegebenen Fischgrößenverteilungsdatensatzes für jede der Fisch-Aufnahmekammern jeweils Fischgrößenverteilungsprädiktionswerte ermittelt, die Rückschluss auf die jeweiligen Einzelgewichte der in den Fisch-Aufnahmekammern vorhandenen Fische geben.

Gemäß einer weiteren bevorzugten Ausbildung der Erfindung zeichnet sich das Verfahren dadurch aus, dass Gesamtgewichtsschätzwerte mittels der Prädiktionseinheit jeweils für jede der Fisch-Aufnahmekammern ermittelt werden, wobei die Gesamtgewichtsschätzwerte jeweils das Summengewicht sämtlicher in der jeweiligen der Fisch-Aufnahmekammern vorhandenen Fische repräsentiert.

Eine zweckmäßige Ausgestaltung der Erfindung ist gekennzeichnet durch Ermitteln einer Volumenprädiktionsgröße auf Basis der Fischanzahl und des ersten Massendurchsatzes, wobei die Volumenprädiktionsgröße das pro Zeiteinheit an die Spiraltankeinrichtung überführte Fischvolumen repräsentiert.

Gemäß einer weiteren bevorzugten Ausführungsform wird die Fördergeschwindigkeit gesteuert, mit der die in den Fisch-Aufnahmekammern vorhandenen Fische mittels der Spiralförderschnecke gefördert werden. Die Steuerung der Fördergeschwindigkeit erfolgt mittels einer ersten Regelungseinheit durch Vergleichen eines vorgegebenen Aufnahmekammerfüllvolumens und der Volumenprädiktionsgröße und Ansteuern der Antriebseinheit derart, dass das in den jeweiligen Fisch-Aufnahmekammern vorhandene Fischvolumen höchstens dem vorgegebenen Aufnahmekammerfüllvolumen entspricht.

Eine weitere vorteilhafte Ausbildung der Erfindung zeichnet sich durch Voreinstellen der mindestens einen Fisch-Verarbeitungsmaschine gemäß vorbestimmter Parametrierdaten auf Basis der für jede der Fisch-Aufnahmekammern ermittelten Prädiktionsgröße aus.

Gemäß einer weiteren bevorzugten Ausbildung der Erfindung wird ein zweiter Massendurchsatz der von der Spiraltankeinrichtung an die nachgeordnete mindestens eine Fisch-Verarbeitungsmaschine mittels der zweiten Fördereinrichtung überführten Fische erfasst. Hierfür ist vorteilhafterweise eine zweite Messeinrichtung vorgesehen.

Gemäß einer weiteren bevorzugten Ausbildung der Erfindung wird die Fördergeschwindigkeit der zweiten Fördereinrichtung durch Vergleich des erfassten zweiten Massendurchsatzes mit einer vorgegebenen Durchsatzleistung der mindestens einen Fisch-Verarbeitungsmaschine derart gesteuert, dass der zweite Massendurchsatz zumindest im Wesentlichen der Durchsatzleistung der mindestens einen Fisch-Verarbeitungsmaschine entspricht.

Eine weitere zweckmäßige Ausbildung der Erfindung zeichnet sich durch wahlfreies Beschicken einer der Fisch-Aufnahmekammern mittels einer Verteileinrichtung aus, wobei die Fische von der ersten Fördereinrichtung auf eine Verteilfördereinrichtung übernommen werden und mittels eines zwischen dem ersten Ende und dem zweiten Ende entlang der Spiralförderschnecke verfahrbar eingerichteten Abweiserelements in eine der Fisch-Aufnahmekammern überführt werden.

Zur Vermeidung von Wiederholung wird hinsichtlich der mit dem erfindungsgemäßen Verfahren verbundenen Vorteile sowie bezüglich alternativer Ausführungsformen auf die vorangehende Beschreibung der erfindungsgemäßen Anordnung verwiesen. Die dort gemachten Ausführungen gelten analog auch für das erfindungsgemäße Verfahren.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnung näher erläutert. In der Zeichnung zeigt:

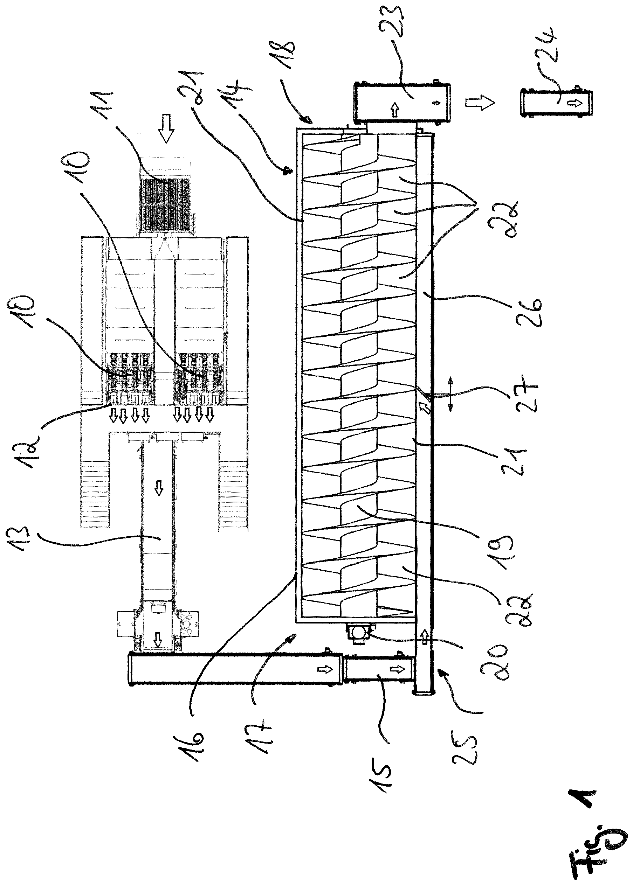

- Fig.1: eine Draufsicht der erfindungsgemäßen Anordnung zur Verarbeitung von Fischen in schematisierter Darstellung.

Anhand der Fig. 1 werden die erfindungsgemäße Anordnung zur Verarbeitung von Fischen sowie das erfindungsgemäße Verfahren im Folgenden näher beschrieben. Die erfindungsgemäße Anordnung umfasst eine Fisch-Schlachteinrichtung 10, die eingerichtet ist, die über eine Fisch-Zuführung 11 an die Fisch-Schlachteinrichtung geförderten Fische zu betäuben und das Ausbluten einzuleiten. Die Fisch-Schlachteinrichtung 10 umfasst hierzu entsprechende - in der Fig. 1 nicht gezeigte - Werkzeuge, insbesondere jeweils ein erstes Fisch-Schlachtwerkzeug, das als Betäubungsmittel ausgebildet ist sowie ein zweites Fisch-Schlachtwerkzeug, das als Ausblutungswerkzeug zum Trennen der Hauptarterie dient. Wie in der Fig. 1 beispielhaft dargestellt, werden zwei der Fisch-Schlachteinrichtungen parallel betrieben. Die Anzahl der Fisch-Schlachteinrichtungen ist beliebig wählbar.

Die Anordnung umfasst weiter eine Fisch-Zähleinrichtung 12, die eingerichtet ist, die Fischanzahl zu erfassen. Auf diese Weise wird die Zahl der in der Fisch-Schlachteinrichtung 10 verarbeiteten Tiere erfasst und überwacht, so dass die Anzahl der von der Fisch-Schlachteinrichtung 10 bereitgestellten betäubten Fische als Eingangsgröße für eine Steuereinrichtung, die weiter unten im Detail beschrieben wird, zur Verfügung steht. Eine erste Fördereinrichtung 13 ist eingerichtet, die betäubten Fische an eine Spiraltankeinrichtung 14 zu überführen. Beispielsweise ist die erste Fördereinrichtung 13 als Endlosförderband ausgebildet. Die erste Fördereinrichtung 13 weist wenigstens eine erste Messeinrichtung 15 auf, wobei die Messeinrichtung 15 eingerichtet ist, einen ersten Massendurchsatz der betäubten Fische zu erfassen. Die Messeinrichtung 15 ist vorzugsweise als Bandwaage beziehungsweise als Flusswaage ausgebildet. Mittels der ersten Messeinrichtung 15 wird so die pro Zeiteinheit geförderte Masse der betäubten Fische kontinuierlich erfasst.

Die Spiraltankeinrichtung 14 dient der Aufnahme der betäubten Fische, so dass diese in der Spiraltankeinrichtung 14 vollständig ausbluten und deren Temperatur auf eine vorgegebene Soll-Temperatur gebracht wird. Die Spiraltankeinrichtung 14 umfasst hierzu einen zur Aufnahme einer Flüssigkeit eingerichteten Aufnahmebehälter 16. Vorzugsweise ist der Aufnahmebehälter 16 mit Seewasser gefüllt, dessen Temperatur durch - in der Zeichnung nicht gezeigte - Kühlaggregate auf einer vorgegebenen Soll-Temperatur gehalten wird.

In dem Aufnahmebehälter 16 erstreckt sich von einem ersten Ende 17 zu einem zweiten Ende 18 eine Spiralförderschnecke 19. Die Spiralförderschnecke 19 ist vorzugsweise als archimedische Schraube ausgebildet. Weiter ist die Spiralförderschnecke 19 in dem Aufnahmebehälter 16 drehbar gelagert angeordnet und mittels einer ersten Antriebseinheit 20 rotierend antreibbar eingerichtet. Die Spiralförderschnecke 19 bildet mit der Innenwandung 21 des Aufnahmebehälters 16 eine Vielzahl von Fisch-Aufnahmekammern 22. Die Spiralförderschnecke 19 ist daher eingerichtet, in den Fisch-Aufnahmekammern 22 vorhandene Fische in Richtung des zweiten Endes 18 des Aufnahmebehälters 16 durch die Flüssigkeit zu fördern.

An dem zweiten Ende 18 des Aufnahmebehälters 16 ist eine zweite Fördereinrichtung 23 angeordnet. Die zweite Fördereinrichtung 23 ist eingerichtet, die Fische an mindestens eine - in der Zeichnung nicht gezeigte - Fisch-Verarbeitungsmaschine, die der Spiraltankeinrichtung 14 nachgeordnet ist, zu überführen. Bei der mindestens einen Fisch-Verarbeitungsmaschine handelt es sich beispielsweise um Fisch-Schlacht- und/oder Entweidemaschinen.

Zumindest die Fisch-Zähleinrichtung 12, die erste Messeinrichtung 15 sowie die erste Antriebseinheit 20 sind an eine - in der Zeichnung nicht gezeigte - Steuereinrichtung angeschlossen. Der Anschluss der genannten Komponenten erfolgt vorzugsweise durch elektrischen Anschluss oder opto-elektronischen Anschluss über entsprechende Datenbus-Systeme.

Die Steuereinrichtung weist eine Auswerteeinheit auf, die eingerichtet ist, auf Basis der erfassten Fischanzahl und des erfassten ersten Massendurchsatzes für mindestens eine der Fisch-Aufnahmekammern 22 jeweils eine fischmengenbezogene Prädiktionsgröße zu ermitteln. Die ermittelte Prädiktionsgröße stellt einen Schätzwert dar, der für jede der Fisch-Aufnahmekammern 22 Rückschluss auf deren Füllungsgrad erlaubt. Mit anderen Worten ist mit der ermittelten Prädiktionsgröße möglich, den Füllzustand der Spiraltankeinrichtung mit Fisch für jede einzelne der Fisch-Aufnahmekammern 22 mit hoher Genauigkeit vorherzusagen.

Vorteilhafterweise ist die Steuereinrichtung ausgebildet, die jeweilige Prädiktionsgröße als Fisch-Durchschnittsgewicht für die jeweilige der Fisch-Aufnahmekammer 22 zu ermitteln. Die Steuereinrichtung ist hierzu beispielsweise derart eingerichtet, dass das Fisch-Durchschnittsgewicht für die jeweilige der Fisch-Aufnahmekammer 22 durch Quotientenbildung ermittelt wird. Über den erfassten ersten Massendurchsatz ermittelt die Steuereinrichtung vorzugsweise für jede der Fisch-Aufnahmekammern 22 jeweils die Gesamtmasse des darin befindlichen Fischs. Die Steuereinrichtung ist weiter eingerichtet, als Prädiktionsgröße das Fisch-Durchschnittsgewicht für jede der Fisch-Aufnahmekammer 22 durch Quotientenbildung aus dem jeweils ermittelten Gesamtgewicht und der Anzahl der sich jeweils in einer der Fisch-Aufnahmekammern befindenden Fische zu ermitteln. Die Steuereinrichtung ist hierzu ferner eingerichtet, basierend auf der erfassten Fischanzahl und Vorgabe der Fördergeschwindigkeit der Spiralförderschnecke mittels der ersten Antriebseinheit 20 zu ermitteln, wie viele Fische sich jeweils in einer der Fisch-Aufnahmekammern 22 befinden.

Vorteilhafterweise umfasst die Steuereinrichtung weiter eine Prädiktionseinheit, die eingerichtet ist, basierend auf den ermittelten Fisch-Durchschnittsgewichten anhand mindestens eines vorgegebenen Fischgrößenverteilungsdatensatzes für jede der Fisch-Aufnahmekammern 22 als weitere Prädiktionsgrößen jeweils Fischgrößenverteilungsprädiktionswerte zu ermitteln, die Rückschluss auf das jeweilige Einzelgewicht der in den Fisch-Aufnahmekammern 22 vorhandenen Fische geben. Anders ausgedrückt ist die Prädiktionseinheit eingerichtet Schätzwerte zu ermitteln, die Rückschluss auf die Gewichtsverteilung der jeweils sich in einer der Fisch-Aufnahmekammern 22 befindenden Fische gibt.

Die zu erwartenden Einzelgewichte von Fischen einer bestimmten Fischart sind hierzu als der vorgegebene Fischgrößenverteilungsdatensatz in der Steuereinrichtung hinterlegt. Mittels der Prädiktionseinheit, die insbesondere als Gewichtsprädiktionseinheit zur Ermittlung der Einzelgewichte der Fische durch Schätzung eingerichtet ist, wird in Kenntnis des vorgegebenen Fischgrößenverteilungsdatensatzes das jeweilige Einzelgewicht der Fische ermittelt. Die Prädiktionseinheit umfasst vorzugsweise einen Fischgrößenverteilungsdatensatz für jede Fischart. Des Weiteren ist es möglich, mehrere Fischgrößenverteilungsdatensätze für verschiedene Fisch-Durchschnittsgewichte in der Prädiktionseinheit in der Steuereinrichtung zu hinterlegen. Alternativ wird der Fischgrößenverteilungsdatensatz bzw. die Fischgrößenverteilungsdatensätze algorithmisch bereitgestellt. Die Fischgrößenverteilungsdatensätze umfassen bevorzugt weitere Kenngrößen, wie beispielsweise die Herkunft der Fische aus verschiedenen Produktionsstandorten. So fließen beispielsweise Informationen zur Herkunft der Fische von einer bestimmen Fischfarm oder dem Standort der Netze als Ausgangsgröße in die Fischgrößenverteilungsdatensätze mit ein.

Vorteilhafterweise ist die Prädiktionseinheit weiter eingerichtet, für jede der Fisch-Aufnahmekammern 22 jeweils ein Gesamtgewichtsschätzwert zu ermitteln. Der Gesamtgewichtsschätzwert gibt jeweils das Summengewicht sämtlicher in einer der Fisch-Aufnahmekammern 22 vorhandenen Fische wieder.

Weiter bevorzugt umfasst die Steuereinrichtung eine Volumenprädiktionseinheit. Die Volumenprädiktionseinheit ist ausgebildet und eingerichtet, auf Basis der Fischanzahl und des ersten Massendurchsatzes eine Volumenprädiktionsgröße zu ermitteln, die das pro Zeiteinheit an die Spiraltankeinrichtung 14 überführte Fischvolumen repräsentiert. Die Volumenprädiktionseinheit umfasst vorteilhafterweise einen Fischvolumenverteilungsdatensatz, anhand dessen ein Zusammenhang zwischen der jeweiligen fischmengenbezogenen Prädiktionsgröße und dem zu erwartenden Fischvolumen hergestellt wird.

Die Steuereinrichtung umfasst weiter eine erste Regelungseinheit zur Steuerung und Regelung der Fördergeschwindigkeit der Spiralförderschnecke 19. Die Regelungseinheit ist eingerichtet, durch Vergleich eines vorgegebenen Aufnahmekammerfüllvolumens und der Volumenprädiktionsgröße die Fördergeschwindigkeit mittels der ersten Antriebseinheit 20 derart zu steuern, dass das in den jeweiligen Fischaufnahmekammern 22 vorhandene Fischvolumen höchstens dem vorgegebenen Aufnahmekammerfüllvolumen entspricht. Anders ausgedrückt ist die Regelungseinheit derart eingerichtet, dass die Fördergeschwindigkeit, mit der die in den Fisch-Aufnahmekammern 22 vorhandenen Fische mittels der Spiralförderschnecke 19 gefördert werden, automatisch so angepasst wird, dass eine möglichst vollständige Füllung der jeweiligen Fisch-Aufnahmekammern 22 ermöglicht wird.

Die Regelungseinheit ist insbesondere eingerichtet, das Verhältnis des Volumenanteils der Fische und des Fluids in einem Bereich zwischen 50:50 bis 60:40 auszuregeln. Die Einhaltung dieses Volumenverhältnisbereichs bietet den Vorteil, dass die Fische gleichmäßig und vollständig von dem Fluid umströmt werden und so ein Kontakt zwischen dem Fluid und jedem der Fische gewährleistet ist. Auf diese Weise wird eine gleichmäßige Temperierung aller Fische sichergestellt.

Vorteilhafterweise ist weiter eine Parametriereinrichtung vorgesehen, die ausgebildet und eingerichtet ist, die mindestens eine Fisch-Verarbeitungsmaschine gemäß vorbestimmter Parametrierdaten auf Basis der für jede der Fische-Aufnahmekammern ermittelten Prädiktionsgröße voreinzustellen. Auf diese Weise ist es möglich, die der Spiraltankeinrichtung 14 nachgeordnete Fisch-Verarbeitungsmaschine mit entsprechend zeitlichem Vorlauf optimal auf die zu erwartenden Fische voreinzustellen.

Vorzugsweise umfasst die zweite Fördereinrichtung 23 eine zweite Messeinrichtung 24. Die zweite Fördereinrichtung 23 ist daher so eingerichtet, dass diese mittels der zweiten Messeinrichtung 24 einen zweiten Massendurchsatz der von der Spiraltankeinrichtung an die nachgeordnete mindestens eine Fisch-Verarbeitungsmaschine überführten Fische erfasst.

Die Steuereinrichtung umfasst weiter eine zweite Regelungseinheit. Die zweite Regelungseinheit ist ausgebildet, durch Vergleich des erfassten zweiten Massendurchsatzes mit einer vorgegebenen Durchsatzleistung der mindestens einen Fisch-Verarbeitungsmaschine die Fördergeschwindigkeit der zweiten Fördereinrichtung 23 derart zu steuern, dass der zweite Massendurchsatz zumindest im Wesentlichen der Durchsatzleistung der mindestens einen Fisch-Verarbeitungsmaschine entspricht. Anders ausgedrückt ist die zweite Regelungseinheit eingerichtet, einerseits den Massenstrom der Fische, die die Spiraltankeinrichtung 14 in Richtung der mindestens einen Fisch-Verarbeitungsmaschine verlassen, möglichst konstant zu halten und anderseits die an die mindestens eine Fisch-Verarbeitungsmaschine pro Zeiteinheit überführte Fischmenge der Durchsatzleistung, also der Aufnahmekapazität der mindestens einen Fisch-Verarbeitungsmaschine, anzupassen. Hierzu wird mittels der zweiten Regelungseinheit der zweite Massendurchsatz vorteilhafterweise so eingestellt, dass dieser der Durchsatzleistung der mindestens einen Fisch-Verarbeitungsmaschine entspricht.

Die erfindungsgemäße Anordnung umfasst vorteilhafterweise weiter eine Verteileinrichtung 25. Die Verteileinrichtung 25 ist zum wahlfreien Beschicken einer der Fisch-Aufnahmekammern 22 ausgebildet und eingerichtet. Hierzu weist die Verteileinrichtung 25 eine Verteilfördereinrichtung 26 auf. Die Verteilfördereinrichtung 26 ist zur Übernahme der Fische von der ersten Fördereinrichtung 13 ausgebildet.

Weiter weist die Verteileinrichtung 25 ein Abweiserelement 27 auf. Das Abweiserelement 27 ist zwischen dem ersten Ende 17 und dem zweiten Ende 18 der Spiraltankeinrichtung 14 fahrbar eingerichtet und zum Überführen der Fische in eine der Fisch-Aufnahmekammern 22 ausgebildet. Die Verteileinrichtung 25 ist vorzugsweise mit der Steuereinrichtung verbunden, so dass die Verteilung der Fische in die einzelnen der Fisch-Aufnahmekammern 22 über die Steuereinrichtung vorgebbar ist.

Die Verteileinrichtung 25 kommt vorzugsweise beim Anfahren der erfindungsgemäßen Anordnung zum Einsatz, um die Kammer zunächst gleichmäßig mit Fischen zu füllen bevor die Spiralförderschnecke 19 in Rotation versetzt wird. Hierzu fährt das Abweiserelement 27 zunächst an das zweite Ende 18 der Spiraltankeinrichtung 14, so dass zunächst diejenige der Fisch-Aufnahmekammern 22 mit Fischen gefüllt wird, die in der Nähe des zweiten Endes 18 liegt. Das Abweiserelement 27 wird mittels der Steuereinrichtung schrittweise in Richtung des ersten Endes 17 verfahren, so dass die einzelnen der Fisch-Aufnahmekammern 22 ausgehend von dem zweiten Ende sukzessiv in Richtung des ersten Endes 17 mit Fischen befüllt werden. Sind sämtliche der Fisch-Aufnahmekammern 22 gefüllt, veranlasst die Steuereinrichtung über die erste Antriebseinheit, dass die Spiralförderschnecke 19 in Rotation versetzt wird.

## Patentansprüche

1. Anordnung zur Verarbeitung von Fischen, umfassend
eine zum Betäuben und Einleiten des Ausblutens der Fische eingerichtete Fisch-Schlachteinrichtung (10), die eine zum Erfassen der Fischanzahl eingerichtete Fisch-Zähleinrichtung (12) aufweist,
eine zum Überführen der betäubten Fische an eine Spiraltankeinrichtung (14) eingerichtete erste Fördereinrichtung (13), wobei die erste Fördereinrichtung (13) wenigstens eine zur Erfassung eines ersten Massendurchsatzes der betäubten Fische ausgebildete erste Messeinrichtung (15) aufweist und
die Spiraltankeinrichtung (14) einen zur Aufnahme einer Flüssigkeit eingerichteten Aufnahmebehälter (16) umfasst, in dem eine sich von einem ersten Ende zu einem zweiten Ende erstreckende Spiralförderschnecke (19) drehbar gelagert angeordnet ist, wobei die Spiralförderschnecke (19) mit der Innenwandung (21) des Aufnahmebehälters (16) eine Vielzahl von Fisch-Aufnahmekammern (22) bildet und die Spiralförderschnecke (19) mittels einer ersten Antriebseinheit (20) rotierend antreibbar eingerichtet ist, um in den Fisch-Aufnahmekammern (22) vorhandene Fische in Richtung des zweiten Endes (18) des Aufnahmebehälters (16) mittels der Spiralförderschnecke (19) durch die Flüssigkeit zu fördern,
eine an dem zweiten Ende (18) des Aufnahmebehälters (16) angeordnete zweite Fördereinrichtung (23), die eingerichtet ist, die Fische an eine der Spiraltankeinrichtung (14) nachgeordnete mindestens eine Fisch-Verarbeitungsmaschine zu überführen und
eine Steuereinrichtung, an die zumindest die Fisch-Zähleinrichtung (12), die erste Messeinrichtung (15) sowie die erste Antriebseinheit (20) angeschlossen sind, wobei die Steuereinrichtung eine Auswerteeinheit umfasst, die eingerichtet ist, auf Basis der erfassten Fischanzahl und des erfassten ersten Massendurchsatzes für mindestens eine der Fisch-Aufnahmekammern (22) jeweils eine fischmengenbezogene Prädiktionsgröße zu ermitteln.

2. Anordnung nach Anspruch 1, **dadurch gekennzeichnet, dass** die Steuereinrichtung ausgebildet ist, die jeweilige Prädiktionsgröße als Fisch-Durchschnittsgewicht für die jeweilige Fisch-Aufnahmekammer (22) basierend auf dem erfassten ersten Massendurchsatz sowie der erfassten Fischanzahl zu ermitteln.

3. Anordnung nach Anspruch 2, **dadurch gekennzeichnet, dass** die Steuereinrichtung eine Prädiktionseinheit umfasst, die eingerichtet ist, basierend auf den ermittelten Fisch-Durchschnittsgewichten anhand mindestens eines vorgegebenen Fischgrößenverteilungsdatensatzes für jede der Fisch-Aufnahmekammern (22) als weitere Prädiktionsgrößen jeweils Fischgrößenverteilungsprädiktionswerte zu ermitteln, die Rückschluss auf die jeweiligen Einzelgewichte der in den Fisch-Aufnahmekammern vorhandenen Fische geben.

4. Anordnung nach Anspruch 3, **dadurch gekennzeichnet, dass** die Prädiktionseinheit weiter eingerichtet ist, für jede der Fisch-Aufnahmekammern (22) jeweils einen Gesamtgewichtsschätzwert, der das Summengewicht sämtlicher in jeweils einer der Fisch-Aufnahmekammern (22) vorhandenen Fische repräsentiert, zu ermitteln.

5. Anordnung nach einem der Ansprüche 1 bis 4, **dadurch gekennzeichnet, dass** die Steuereinrichtung eine Volumenprädiktionseinheit umfasst, die ausgebildet und eingerichtet ist, auf Basis der Fischanzahl und des ersten Massendurchsatzes eine Volumenprädiktionsgröße zu ermitteln, die das pro Zeiteinheit an die Spiraltankeinrichtung überführte Fischvolumen repräsentiert.

6. Anordnung nach Anspruch 5, **dadurch gekennzeichnet, dass** die Steuereinrichtung eine erste Regelungseinheit umfasst, die durch Vergleich eines vorgegebenen Aufnahmekammerfüllvolumens und der Volumenprädiktionsgröße eingerichtet ist, die Fördergeschwindigkeit, mit der die in den Fisch-Aufnahmekammern (22) vorhandenen Fische mittels der Spiralförderschnecke (19) gefördert werden, mittels der ersten Antriebseinheit (20) derart zu steuern, dass das in den jeweiligen Fisch-Aufnahmekammern (22) vorhandene Fischvolumen höchstens dem vorgegebenen Aufnahmekammerfüllvolumen entspricht.

7. Anordnung nach einem der Ansprüche 1 bis 6 weiter umfassend eine Parametriereinrichtung, die ausgebildet und eingerichtet ist, die mindestens eine Fisch-Verarbeitungsmaschine gemäß vorbestimmter Parametrierdaten auf Basis der für jede der Fisch-Aufnahmekammern (22) ermittelten Prädiktionsgröße voreinzustellen.

8. Anordnung nach einem der Ansprüche 1 bis 7, **dadurch gekennzeichnet, dass** die zweite Fördereinrichtung (23) eine zur Erfassung eines zweiten Massendurchsatzes der von der Spiraltankeinrichtung (14) an die nachgeordnete mindestens eine Fisch-Verarbeitungsmaschine überführten Fische eingerichtete zweite Messeinrichtung (24) umfasst.

9. Anordnung nach Anspruch 8, **dadurch gekennzeichnet, dass** die Steuereinrichtung eine zweite Regelungseinheit umfasst, die ausgebildet ist, durch Vergleich des erfassten zweiten Massendurchsatzes mit einer vorgegebenen Durchsatzleistung der mindestens einen Fisch-Verarbeitungsmaschine, die Fördergeschwindigkeit der zweiten Fördereinrichtung (23) derart zu steuern, dass der zweite Massendurchsatz zumindest im Wesentlichen der Durchsatzleistung der mindestens einen Fisch-Verarbeitungsmaschine entspricht.

10. Anordnung nach einem der Ansprüche 1 bis 9, weiter umfassend eine zum wahlfreien Beschicken einer der Fisch-Aufnahmekammern (22) ausgebildete Verteileinrichtung (25), wobei die Verteileinrichtung (25) eine Verteilfördereinrichtung (26) zur Übernahme der Fische von der ersten Fördereinrichtung (13) und ein zwischen dem ersten Ende (17) und dem zweiten Ende (18) entlang der Spiralförderschnecke (19) verfahrbar eingerichtetes Abweiserelement (27) zum Überführen der Fische in eine der Fisch-Aufnahmekammern (22) umfasst.

11. Verfahren zur Verarbeitung von Fischen, umfassend die Schritte:
Betäuben und Einleiten des Ausblutens der Fische mittels einer Fisch-Schlachteinrichtung (10),
Erfassen der Fischanzahl mittels einer Zähleinrichtung,
Überführen der betäubten Fische an eine Spiraltankeinrichtung (14) mittels einer ersten Fördereinrichtung (13),
Erfassen eines ersten Massendurchsatzes der betäubten Fische mittels einer ersten Messeinrichtung (15) während des Überführens, wobei
die Spiraltankeinrichtung (14) einen zur Aufnahme einer Flüssigkeit eingerichteten Aufnahmebehälter (16) umfasst, in dem eine sich von einem ersten Ende (17) zu einem zweiten Ende (18) erstreckende Spiralförderschnecke (19) drehbar gelagert angeordnet ist, wobei die Spiralförderschnecke (19) mit der Innenwandung (21) des Aufnahmebehälters (16) eine Vielzahl von Fisch-Aufnahmekammern (22) bildet und die Spiralförderschnecke (19) mittels einer ersten Antriebseinheit (20) rotierend angetrieben wird, um in den Fisch-Aufnahmekammern (22) vorhandene Fische in Richtung des zweiten Endes (18) des Aufnahmebehälters (16) mittels der Spiralförderschnecke (19) durch die Flüssigkeit zu fördern,
Überführen der Fische an eine der Spiraltankeinrichtung (14) nachgeordnete mindestens eine Fisch-Verarbeitungsmaschine mittels einer an dem zweiten Ende (18) des Aufnahmebehälters (16) angeordneten zweiten Fördereinrichtung (23), und
Ermitteln einer fischmengenbezogenen Prädiktionsgröße auf Basis der erfassten Fischanzahl und des erfassten ersten Massendurchsatzes für mindestens eine der Fisch-Aufnahmekammern (22) mittels einer Auswerteeinheit einer Steuereinrichtung, an die zumindest die Fischzähleinrichtung (12), die erste Messeinrichtung (15) sowie die erste Antriebseinheit (20) angeschlossen sind, wobei die Steuereinrichtung die Auswerteeinheit umfasst.

12. Verfahren nach Anspruch 11, **dadurch gekennzeichnet, dass** die jeweilige Prädiktionsgröße als Fisch-Durchschnittsgewicht für die jeweilige Fisch-Aufnahmekammer (22) basierend auf dem erfassten ersten Massendurchsatz sowie der erfassten Fischanzahl ermittelt wird.

13. Verfahren nach Anspruch 12, **dadurch gekennzeichnet, dass** als weitere Prädiktionsgrößen mittels einer Prädiktionseinheit basierend auf den ermittelten Fisch-Durchschnittsgewichten anhand mindestens eines vorgegebenen Fischgrößenverteilungsdatensatzes für jede der Fisch-Aufnahmekammern jeweils Fischgrößenverteilungsprädiktionswerte ermittelt werden, die Rückschluss auf die jeweiligen Einzelgewichte der in den Fisch-Aufnahmekammern (22) vorhandenen Fische geben.

14. Verfahren nach Anspruch 13, **gekennzeichnet durch** Ermitteln von Gesamtgewichtsschätzwerten mittels der Prädiktionseinheit jeweils für jede der Fisch-Aufnahmekammern (22), wobei die Gesamtgewichtsschätzwerte jeweils das Summengewicht sämtlicher in der jeweiligen der Fisch-Aufnahmekammern (22) vorhandenen Fische repräsentiert.

15. Verfahren nach einem der Ansprüche 11 bis 14, **gekennzeichnet durch** Ermitteln einer Volumenprädiktionsgröße auf Basis der Fischanzahl und des ersten Massendurchsatzes, wobei die Volumenprädiktionsgröße das pro Zeiteinheit an die Spiraltankeinrichtung (14) überführte Fischvolumen repräsentiert.

16. Verfahren nach Anspruch 15, **gekennzeichnet durch** Steuern der Fördergeschwindigkeit, mit der die in den Fisch-Aufnahmekammern (22) vorhandenen Fische mittels der Spiralförderschnecke (19) gefördert werden, mittels einer ersten Regelungseinheit durch Vergleichen eines vorgegebenen Aufnahmekammerfüllvolumens und der Volumenprädiktionsgröße und Ansteuern der ersten Antriebseinheit (20) derart, dass das in den jeweiligen Fisch-Aufnahmekammern (22) vorhandene Fischvolumen höchstens dem vorgegebenen Aufnahmekammerfüllvolumen entspricht.

17. Verfahren nach einem der Ansprüche 11 bis 16, **gekennzeichnet durch** Voreinstellen der mindestens einen Fisch-Verarbeitungsmaschine gemäß vorbestimmter Parametrierdaten auf Basis der für jede der Fisch-Aufnahmekammern (22) ermittelten Prädiktionsgröße.

18. Verfahren nach einem der Ansprüche 11 bis 17, **gekennzeichnet durch** Erfassen eines zweiten Massendurchsatzes mittels einer zweiten Messeinrichtung (24) der von der Spiraltankeinrichtung (14) an die nachgeordnete mindestens eine Fisch-Verarbeitungsmaschine mittels der zweiten Fördereinrichtung (23) überführten Fische.

19. Verfahren nach Anspruch 18, **gekennzeichnet durch** Steuern der Fördergeschwindigkeit der zweiten Fördereinrichtung (23) durch Vergleich des erfassten zweiten Massendurchsatzes mit einer vorgegebenen Durchsatzleistung der mindestens einen Fisch-Verarbeitungsmaschine derart, dass der zweite Massendurchsatz zumindest im Wesentlichen der Durchsatzleistung der mindestens einen Fisch-Verarbeitungsmaschine entspricht.

20. Verfahren nach einem der Ansprüche 11 bis 19, **gekennzeichnet durch** wahlfreies Beschicken einer der Fisch-Aufnahmekammern (22) mittels einer Verteileinrichtung (25), wobei die Fische von der ersten Fördereinrichtung (13) auf eine Verteilfördereinrichtung (26) übernommen werden und mittels eines zwischen dem ersten Ende (17) und dem zweiten Ende (18) entlang der Spiralförderschnecke (19) verfahrbar eingerichteten Abweiserelements (27) in eine der Fisch-Aufnahmekammern (22) überführt werden.

## Claims

1. Arrangement for processing fish, comprising
a fish slaughter device (10) designed to stun and initiate bleeding of the fish, having a fish counting device (12) designed to record the number of fish,
a first conveying device (13) designed to transfer the stunned fish to a spiral tank device (14), wherein the first conveying device (13) has at least one first measuring device (15) configured to record a first mass throughput of the stunned fish and
the spiral tank device (14) comprises a receptacle (16) designed to receive a liquid, in which is arranged a rotatably supported screw conveyor (19) extending from a first end to a second end, wherein the screw conveyor (19) forms a plurality of fish receiving chambers (22) with the inner wall (21) of the receptacle (16) and the screw conveyor (19) is designed to be rotatably drivable by means of a first drive unit (20) in order to convey fish present in the fish receiving chambers (22) through the liquid towards the second end (18) of the receptacle (16) by means of the screw conveyor (19),
a second conveying device (23) arranged at the second end (18) of the receptacle (16) which is designed to transfer the fish to at least one fish processing machine downstream of the spiral tank device (14) and
a control device to which at least the fish counting device (12), the first measuring device (15) and the first drive unit (20) are connected, wherein the control device comprises an evaluation unit which is designed to determine a fish-quantity-related prediction variable for at least one of the fish receiving chambers (22) based on the number of fish recorded and the first mass throughput recorded.

2. Arrangement according to claim 1, **characterised in that** the control device is configured to determine the relevant prediction variable as an average fish weight for each fish receiving chamber (22) based on the first mass throughput recorded and the number of fish recorded.

3. Arrangement according to claim 2, **characterised in that** the control device comprises a prediction unit which, based on the average fish weights determined with the help of at least one specified fish size distribution dataset for each of the fish receiving chambers (22), is designed to determine fish size distribution prediction values as further prediction variables, which provide information about the respective individual weights of the fish present in the fish receiving chambers.

4. Arrangement according to claim 3, **characterised in that** the prediction unit is further designed to determine an estimated total weight value for each of the fish receiving chambers (22) which represents the total weight of all fish present in any one of the fish receiving chambers (22).

5. Arrangement according to any one of claims 1 to 4, **characterised in that** the control device comprises a volume prediction unit which, based on the number of fish and the first mass throughput, is designed and configured to determine a volume prediction variable which represents the volume of fish transferred per time unit to the spiral tank device.

6. Arrangement according to claim 5, **characterised in that** the control device comprises a first control unit which, by comparing a specified receiving chamber filling volume and the volume prediction variable, is designed to control the conveying speed, at which the fish present in the fish receiving chambers (22) are conveyed by the screw conveyor (19), by means of the first drive unit (20) in such a manner that the volume of fish present in the respective fish receiving chambers (22) corresponds at most to the specified receiving chamber filling volume.

7. Arrangement according to any one of claims 1 to 6, further comprising a parameterisation device which is designed and configured to pre-set the at least one fish processing machine according to predetermined parameterisation data based on the prediction variable determined for each of the fish receiving chambers (22).

8. Arrangement according to any one of claims 1 to 7, **characterised in that** the second conveying device (23) comprises a second measuring device (24) designed to record a second mass throughput of the fish transferred from the spiral tank device (14) to the at least one downstream fish processing machine.

9. Arrangement according to claim 8, **characterised in that** the control device comprises a second control unit which is configured, by comparing the second mass throughput recorded with a specified throughput rate of the at least one fish processing machine, to control the conveying speed of the second conveying device (23) in such a manner that the second mass throughput corresponds at least substantially to the throughput rate of the at least one fish processing machine.

10. Arrangement according to any one of claims 1 to 9, further comprising a distributing device (25) configured to randomly charge one of the fish receiving chambers (22), wherein the distributing device (25) has a distributing conveying device (26) for taking over the fish from the first conveying device (13) and a deflector element (27) designed to be movable along the screw conveyor (19) between the first end (17) and the second end (18) for transferring the fish into one of the fish receiving chambers (22).

11. Method for processing fish, comprising the steps:
stunning and initiating bleeding of the fish by means of a fish slaughter device (10),
recording the number of fish by means of a counting device,
transferring the stunned fish to a spiral tank device (14) by means of a first conveying device (13),
recording a first mass throughput of the stunned fish by means of a first measuring device (15) during the transfer, wherein
the spiral tank device (14) comprises a receptacle (16) designed to receive a liquid, in which is arranged a rotatably supported screw conveyor (19) extending from a first end (17) to a second end (18), wherein the screw conveyor (19) forms a plurality of fish receiving chambers (22) with the inner wall (21) of the receptacle (16) and the screw conveyor (19) is rotatably driven by means of a first drive unit (20) in order to convey fish present in the fish receiving chambers (22) through the liquid towards the second end (18) of the receptacle (16) by means of the screw conveyor (19),
transferring the fish to at least one fish processing machine downstream of the spiral tank device (14) by means of a second conveying device (23) arranged at the second end (18) of the receptacle (16), and
determining a fish-quantity-related prediction variable for at least one of the fish receiving chambers (22) based on the number of fish recorded and the first mass throughput recorded by means of an evaluation unit of a control device to which at least the fish counting device (12), the first measuring device (15) and the first drive unit (20) are connected, wherein the control device comprises the evaluation unit.

12. Method according to claim 11, **characterised in that** the relevant prediction variable is determined as an average fish weight for each fish receiving chamber (22) based on the first mass throughput recorded and the number of fish recorded.

13. Method according to claim 12, **characterised in that** fish size distribution prediction values, which provide information about the respective individual weights of the fish present in the fish receiving chambers, are determined as further prediction variables by means of a prediction unit, based on the average fish weights determined with the help of at least one specified fish size distribution dataset for each of the fish receiving chambers (22).

14. Method according to claim 13, **characterised by** determining the estimated total weight values by means of the prediction unit for each of the fish receiving chambers (22), wherein the estimated total weight values represent the total weight of all fish present in any one of the fish receiving chambers (22).

15. Method according to any one of claims 11 to 14, **characterised by** determining a volume prediction variable based on the number of fish and the first mass throughput, wherein the volume prediction variable represents the volume of fish transferred per time unit to the spiral tank device (14).

16. Method according to claim 15, **characterised by** controlling the conveying speed at which the fish present in the fish receiving chambers (22) are conveyed by the screw conveyor (19), by means of a first control unit by comparing a specified fish receiving chamber filling volume and the volume prediction variable and operating the first drive unit (20) in such a manner that the volume of fish present in the respective fish receiving chambers (22) corresponds at most to the specified receiving chamber filling volume.

17. Method according to any one of claims 11 to 16, **characterised by** pre-setting the at least one fish processing machine according to predetermined parameterisation data based on the prediction variable determined for each of the fish receiving chambers (22).

18. Method according to any one of claims 11 to 17, **characterised by** recording a second mass throughput of the fish, transferred by means of the second conveying device (23) from the spiral tank device (14) to the at least one downstream fish processing machine, by means of a second measuring device (24).

19. Method according to claim 18, **characterised by** controlling the conveying speed of the second conveying device (23) by comparing the second mass throughput recorded with a specified throughput rate of the at least one fish processing machine in such a manner that the second mass throughput corresponds at least substantially to the throughput rate of the at least one fish processing machine.

20. Method according to any one of claims 11 to 19, **characterised by** randomly charging one of the fish receiving chambers (22) by means of a distributing device (25), wherein the fish are taken over from the first conveying device (13) onto a distributing conveying device (26) and are transferred by means of a deflector element (27) designed to be movable along the screw conveyor (19) between the first end (17) and the second end (18) into one of the fish receiving chambers (22).

## Revendications

1. Agencement pour le traitement de poissons, comprenant
un dispositif d'abattage de poissons (10) destiné à étourdir et démarrer la saignée des poissons, lequel présente un dispositif de décompte des poissons (12) destiné à détecter le nombre de poissons,
un premier dispositif de convoyage (13) destiné à transférer les poissons étourdis à un dispositif de réservoir à spirale (14), ledit premier dispositif de convoyage (13) présentant au moins un premier dispositif de mesure (15) conçu pour détecter un premier débit massique des poissons étourdis, et
ledit dispositif de réservoir à spirale (14) comprenant un réceptacle (16) destiné à recueillir un liquide, réceptacle dans lequel une vis sans fin en spirale (19) s'étirant d'une première extrémité à une deuxième extrémité est agencée montée pivotante, ladite vis sans fin en spirale (19) constituant avec la paroi intérieure (21) du réceptacle (16) une pluralité de cellules de réception de poissons (22) et ladite vis sans fin en spirale (19) étant réalisée entraînable en rotation à l'aide d'une première unité d'entraînement (20) pour acheminer à travers le liquide les poissons présents dans les cellules de réception de poissons (22) en direction de la deuxième extrémité (18) du réceptacle (16) au moyen de la vis sans fin en spirale (19),
un deuxième dispositif de convoyage (23) agencé à la deuxième extrémité (18) du réceptacle (16), lequel dispositif de convoyage est destiné à transférer les poissons à au moins une machine de traitement de poissons agencée en aval du dispositif de réservoir à spirale (14), et
un dispositif de commande, auquel sont raccordés au moins le dispositif de décompte de poissons (12), le premier dispositif de mesure (15) ainsi que la première unité d'entraînement (20), ledit dispositif de commande comprenant une unité d'évaluation destinée à déterminer, sur la base du nombre de poissons détectés et du premier débit massique détecté, respectivement une grandeur prévisionnelle en termes de quantité de poissons pour au moins une des cellules de réception de poissons (22).

2. Agencement selon la revendication 1, **caractérisé en ce que** le dispositif de commande est conçu pour déterminer la grandeur prévisionnelle respective en tant que poids moyen de poisson pour la cellule de réception de poisson (22) respective, à l'appui du premier débit massique détecté ainsi que du nombre de poissons détectés.

3. Agencement selon la revendication 2, **caractérisé en ce que** le dispositif de commande comprend une unité prévisionnelle destinée, à l'appui des poids moyens de poissons déterminés, au moyen d'au moins un lot prédéfini de données de répartition de taille de poisson et pour chacune des cellules de réception de poisson (22), à déterminer des valeurs prévisionnelles de répartition de taille de poisson respectives en tant qu'autres grandeurs prévisionnelles, lesquelles valeurs permettent de tirer des conclusions sur les poids individuels respectifs des poissons présents dans les cellules de réception de poissons.

4. Agencement selon la revendication 3, **caractérisé en ce que** l'unité prévisionnelle est de plus destinée à déterminer, pour chacune des cellules de réception de poissons (22), une valeur estimative de poids total respective qui représente le poids total de tous les poissons se trouvant respectivement dans une des cellules de réception de poissons (22).

5. Agencement selon l'une quelconque des revendications 1 à 4, **caractérisé en ce que** le dispositif de commande comprend une unité prévisionnelle de volume conçue pour et destinée à déterminer, sur la base du nombre de poissons et du premier débit massique, une grandeur prévisionnelle de volume qui représente le volume de poissons transférés au dispositif de réservoir à spirale, par unité temporelle.

6. Agencement selon la revendication 5, **caractérisé en ce que** le dispositif de commande comprend une première unité de régulation qui est destinée, par comparaison d'un volume de remplissage de cellule de réception prédéfini à la grandeur prévisionnelle de volume, à contrôler, au moyen de la première unité d'entraînement (20), la vitesse de convoyage, à laquelle les poissons présents dans les cellules de réception de poissons (22) sont acheminés au moyen de la vis sans fin en spirale (19), de telle sorte que le volume de poissons présents dans les cellules de réception de poissons (22) respectives correspond au maximum au volume de remplissage des cellules de réception de poissons prédéfini.

7. Agencement selon l'une quelconque des revendications 1 à 6, comprenant en outre un dispositif de paramétrage conçu pour et destiné à paramétrer l'au moins une machine de traitement de poissons en fonction de données de paramétrage prédéfinies, sur la base des grandeurs prévisionnelles déterminées pour chacune des cellules de réception de poissons (22).

8. Agencement selon l'une quelconque des revendications 1 à 7, **caractérisé en ce que** le deuxième dispositif de convoyage (23) comprend un deuxième dispositif de mesure (24) destiné à détecter un deuxième débit massique des poissons transférés par le dispositif de réservoir à spirale (14) à l'au moins une machine de traitement de poissons agencée en aval.

9. Agencement selon la revendication 8, **caractérisé en ce que** le dispositif de commande comprend une deuxième unité de régulation conçue pour contrôler la vitesse de convoyage du deuxième dispositif de convoyage (23) par comparaison du deuxième débit massique détecté à une puissance de débit prédéfinie de l'au moins une machine de traitement de poissons de telle sorte que le deuxième débit massique correspond au moins sensiblement à la puissance de débit de l'au moins une machine de traitement de poissons.

10. Agencement selon l'une quelconque des revendications 1 à 9, comprenant en outre un dispositif de répartition (25) conçu pour charger au hasard une des cellules de réception de poissons (22), ledit dispositif de répartition (25) comprend un dispositif de convoyage de répartition (26) pour la reprise des poissons à partir du premier dispositif de convoyage (13) et un élément déflecteur (27) conçu mobile le long de la vis sans fin en spirale (19) entre la première extrémité (17) et la deuxième extrémité (18) pour transférer les poissons dans une des cellules de réception de poissons (22).

11. Procédé pour le traitement de poissons, comprenant les étapes suivantes :
étourdissement et début de la saignée des poissons au moyen d'un dispositif d'abattage de poissons (10),
détection du nombre de poissons au moyen d'un dispositif de décompte,
transfert des poissons étourdis dans un dispositif de réservoir en spirale (14) au moyen d'un premier dispositif de convoyage (13),
détection d'un premier débit massique des poissons étourdis au moyen d'un premier dispositif de mesure (15) au cours du transfert,
le dispositif de réservoir à spirale (14) comprenant un réceptacle (16) destiné à recueillir un liquide, réceptacle dans lequel une vis sans fin en spirale (19) s'étirant d'une première extrémité (17) à une deuxième extrémité (18) est agencée montée pivotante, ladite vis sans fin en spirale (19) constituant avec la paroi intérieure (21) du réceptacle (16) une pluralité de cellules de réception de poissons (22) et ladite vis sans fin en spirale (19) étant réalisée entraînée en rotation à l'aide d'une première unité d'entraînement (20) pour acheminer à travers le liquide les poissons présents dans les cellules de réception de poissons (22) en direction de la deuxième extrémité (18) du réceptacle (16) au moyen de la vis sans fin en spirale (19),
transfert des poissons à une au moins une machine de traitement de poissons agencée en aval du dispositif de réservoir à spirale (14) au moyen d'un deuxième dispositif de convoyage (23) agencé à la deuxième extrémité (18) du réceptacle (16), et
détermination d'une grandeur prévisionnelle en termes de quantité de poissons, sur la base du nombre de poissons détectés et du premier débit massique détecté pour au moins une des cellules de réception de poissons (22) au moyen d'une unité d'évaluation d'un dispositif de commande auquel sont connectés au moins le dispositif de décompte de poissons (12), le premier dispositif de mesure (15) ainsi que la première unité d'entraînement (20), ledit dispositif de commande comprenant l'unité d'évaluation.

12. Procédé selon la revendication 11, **caractérisé en ce que** la grandeur prévisionnelle respective est déterminée en tant que poids moyen de poisson pour la cellule de réception de poisson (22) respective, à l'appui du premier débit massique détecté ainsi que du nombre de poissons détectés.

13. Procédé selon la revendication 12, **caractérisé en ce que** des valeurs prévisionnelles de répartition de taille de poisson, qui permettent de tirer de conclusion sur les poids individuels respectifs des poissons présents dans les cellules de réception de poissons (22), sont déterminées à chaque fois en tant qu'autres grandeurs prévisionnelles, au moyen d'une unité prévisionnelle et à l'appui des poids moyens de poissons déterminés, au moyen d'au moins un lot prédéfini de données de répartition de taille de poisson, pour chacune des cellules de réception de poisson.

14. Procédé selon la revendication 13, **caractérisé par** la détermination de valeurs estimatives de poids total à l'aide de l'unité prévisionnelle respectivement pour chacune des cellules de réception de poisson (22), les valeurs estimatives de poids total représentant à chaque fois le poids total de tous les poissons présents dans chacune des différentes cellules de réception de poisson (22).

15. Procédé selon l'une quelconque des revendications 11 à 14, **caractérisé par** détermination d'une grandeur prévisionnelle de volume sur la base du nombre de poissons et du premier débit massique, la grandeur prévisionnelle de volume représentant le volume de poissons transférés par unité de temps au dispositif de réservoir à spirale (14).

16. Procédé selon la revendication 15, **caractérisé par** le contrôle de la vitesse de convoyage à laquelle les poissons présents dans les cellules de réception de poissons (22) sont acheminés à l'aide de la vis sans fin en spirale (19), au moyen d'une première unité de régulation par comparaison d'un volume de remplissage de cellule de réception prédéterminé à la grandeur prévisionnelle de volume, et par pilotage de la première unité d'entraînement (20) de telle sorte que le volume de poissons présents dans les différentes cellules de réception de poisson (22) correspond au maximal au volume de remplissage prédéterminé des cellules de réception.

17. Procédé selon l'une quelconque des revendications 11 à 16, **caractérisé par** préréglage de l'au moins une machine de traitement de poissons en fonction de données de paramétrage prédéfinies, sur la base des grandeurs prévisionnelles déterminées pour chacune des cellules de réception de poissons (22).

18. Procédé selon l'une quelconque des revendications 11 à 17, **caractérisé par** détection d'un deuxième débit massique au moyen d'un deuxième système de mesure (24) des poissons transférés au moyen d'un deuxième système de convoyage (23) par le dispositif de réservoir à spirale (14) à l'au moins une machine de traitement de poissons agencée en aval.

19. Procédé selon la revendication 18, **caractérisé par** le contrôle de la vitesse de convoyage du deuxième système de convoyage (23) par comparaison du deuxième débit massique détecté à une puissance de débit prédéfinie de l'au moins une machine de traitement de poissons de telle sorte que le deuxième débit massique correspond au moins sensiblement à la puissance de débit de l'au moins une machine de traitement de poissons.

20. Procédé selon l'une quelconque des revendications 11 à 19, **caractérisé par** chargement au hasard d'une des cellules de réception de poissons (22) à l'aide d'un dispositif de répartition (25), les poissons étant repris par le premier dispositif de convoyage (13) sur un dispositif de convoyage de répartition (26) et transférés dans une des cellules de réception de poissons (22) au moyen d'un élément déflecteur (27) conçu mobile le long de la vis sans fin en spirale (19) entre la première extrémité (17) et la deuxième extrémité (18).
